# EUROPÄISCHE PATENTSCHRIFT

(11) **EP 2 896 704 B1**
(45) Veröffentlichungstag und Bekanntmachung des Hinweises auf die Patenterteilung: **17.01.2018**
(21) Anmeldenummer: 14004136.9
(22) Anmeldetag: 08.12.2014
(51) Int. Cl.: C21D 9/24, C21D 1/34, B23D 63/04, B23D 65/00

(54) **Verfahren und Vorrichtung zum Schränken von Bandsägeblättern**
Method and device for setting band saw blades
Procédé et dispositif de croisement de lames de scie à ruban

(30) Priorität: 13.01.2014 DE 102014000129
(43) Veröffentlichungstag der Anmeldung: 22.07.2015
(73) Patentinhaber: Haas Maschinenbau GmbH, 42855 Remscheid (DE)
(72) Erfinder: Haas, Hans Robert, 42853 Remscheid (DE); Haas, Oliver, 42897 Remscheid (DE)
(74) Vertreter: Priebisch, Rüdiger

(56) Entgegenhaltungen:
- DE-C- 613 406
- DE-C- 965 817
- DE-C- 977 241

## Beschreibung

Die Erfindung betrifft ein Verfahren zum Schränken von Bandsägeblättern nach den Merkmalen der Präambel des Hauptanspruchs und eine Vorrichtung zur Durchführung des Verfahrens nach den Merkmalen der Präambel des Anspruchs 13.

Aus der DE 613 406 C ist ein Verfahren zum Härten von Sägebändern und Sägeblättern bekannt. Hierbei werden die Zahnspitzen auf Härtetemperatur erhitzt. Zu diesem Zweck werden die beiden Pole eines Stromkreises an die zu härtenden Zahnspitzen angelegt. Die Erhitzung kann gleichzeitig zum Härten und Schränken der Zahnspitzen ausgenutzt werden. Dabei kann das Schränken mittels der Elektroden ausgeführt werden. Eine Schränkung von bereits gehärteten Sägeblättern erfolgt hierbei nicht.

Aus der DE 1 235 711 B ist eine Anwendung eines Gesenkes zum Schränken von Kreissägeblättern aus Schnellschnittstahl beim an sich bekannten Schränken im glühenden Zustand bekannt. Im Gesenk erfolgt das Schränken und Härten in einem Arbeitsgang.

Aus der DE 1 803 381 U ist eine Maschine zum Schränken von Sägeblättern mit selbsttätigem Vorschub und mechanisch gesteuerter Schränkvorrichtung bekannt. Vor der Schränkvorrichtung kann eine Heizvorrichtung angeordnet werden, welche die Zahnspitzen der Sägeblätter vor dem Schränken auf Rotglut erhitzt. Im Bereich der Schränkvorrichtung kann eine Kaltluftzuführungseinrichtung vorgesehen sein, welche die jeweils zwischen zwei Schränkbolzen festgehaltenen Zahnspitzen unmittelbar nach der Schränkung abkühlt und sie dadurch wieder härtet. Hier wird offensichtlich eine bereits durchgeführte Härtung der Zahnspitzen aufgehoben, um sie nach dem Schränken wieder zu erneuern. Durch diese Vorgehensweise kann aber nicht sichergestellt sein, dass die Sägezähne nach dem Schränken dieselbe Härte aufweisen wie vor dem Schränken.

Aus der DE 977 241 C ist insbesondere aus dem Patentanspruch 5 und der zugehöriger Beschreibung ein Verfahren zur Herstellung von Sägeblättern bekannt, das dadurch gekennzeichnet ist, dass der Rücken des Sägeblattrohlings und die Zähne gegebenenfalls unter der Ausnahme der Zahnspitzen gehärtet werden, dass die Zahnspitzen dann noch zu einer wesentlich höheren Härte gehärtet werden und dass nachträglich die Zähne an einer Stelle zwischen der Basis der Zähne und einer bei der Härtung der Zahnspitzen sich ausbildenden, im Verhältnis zu den übrigen Teilen weicheren Zone geschränkt werden. Damit schlägt dieses Dokument eindeutig ein gestuftes Härteverfahren vor und nur in Zusammenhang damit eine Schränkung.

Die Aufgabe der Erfindung besteht darin, ein Verfahren und eine hierfür geeignete Vorrichtung zum Schränken von Sägeblättern anzugeben, welche aus einem stählernen Grundmaterial und daran angebrachten Sägezähnen bestehen, die ein gegenüber dem Grundmaterial härteres Material aufweisen, wobei sichergestellt sein soll, dass durch das Schränken eine bereits vor dem Schränken vorliegende Härte der Sägezähne unverändert bleibt.

Diese Aufgabe löst die Erfindung mit den Merkmalen des Anspruchs 1 und des Anspruchs 13.

Ausgehend von einem Verfahren zum Schränken von Bandsägeblättern, bestehend aus einem stählernen Grundmaterial und daran angebrachten Sägezähnen, die ein gegenüber dem Grundmaterial härteres Material aufweisen, ist das erfindungsgemäße Verfahren dadurch gekennzeichnet, dass die Sägezähne unmittelbar vor dem Schränken zwischen ihrem Zahnfuß und ihrer Zahnspitze lediglich einer lokalen, in Längsrichtung des Bandsägeblattes schmalstreifenförmig verlaufenden Erwärmung bis kurz unterhalb der Anlasstemperatur von 600 °C unterzogen werden, wobei die Einwirkungszeit der Erwärmung weniger als 2 Sekunden beträgt und derart kurz gewählt ist, dass im Sägeblattgefüge keine anlassbedingten Umwandlungs- und / oder Diffusionsvorgänge auftreten und wobei die Sägezähne unmittelbar nach Ablauf der Einwirkungszeit geschränkt und dann abgekühlt werden. Auf diese Weise werden jegliche Knackfroscheffekte vermieden.

Hieraus ergibt sich die Möglichkeit, an den Sägezähnen eine erwärmte Biegelinie zu schaffen, um welche der jeweilige Zahn unter verminderter Gefahr von Rissbildung geschränkt werden kann.

Indem die Sägezähne unmittelbar vor der Schränkung erwärmt werden, wird sichergestellt, dass die Sägezähne mit der durch die Erwärmung aufgheizten Temperatur geschränkt werden. Die Erwärmungstemperatur beträgt dabei < 600 Grad Celsius.

Die Erwärmung kann insbesondere induktiv, konduktiv oder mittels Laserbestrahlung erfolgen.

Mit einer erfindungsgemäß ausgeführten induktiven Erwärmung ist es von Vorteil, dass hier hohe Energiedichten erzielt werden, mit welchen es möglich ist, die Sägezähne in der erfindungsgemäß kurzen Einwirkungszeit sogar von Raumtemperatur an auf die gewünschte Erwärmungs-, bzw. Schränktemperatur zu bringen. Vorzugsweise erfolgt die induktive Erwärmung im Niederfrequenzbereich. Durch diese Maßnahme wird eine Durchwärmung der Sägezähne sichergestellt. Die Frequenz ist hierbei eine Funktion der Dicke des Bandsägeblattes.

Bei einer konduktiver Erwärmung liegt der besondere Vorteil darin, dass die lokale, schmalstreifenförmige Erwärmungszone am Sägezahn Teil eines elektrischen Stromkreises wird. Die Wärme entsteht hierbei direkt im Inneren des jeweiligen Sägezahns und dringt nach außen. Das Material des Sägezahns kann die hierbei entstehende Wärme nahezu vollständig absorbieren. Die Aufheizgeschwindigkeit kann hierbei über 600°C/s liegen, wodurch besonders kurze Einwirkungszeiten für die erfindungsgemäße Erwärmung von deutlich unter 1 Sekunde möglich sind. Bei einer konduktiv ausgeführten erfindungsgemäßen Erwärmung kann z. B. eine Elektrode verwendet werden, die einen am Bandsägeblatt ansetzungsfähigen Kopf aufweist, der eine schmalstreifenförmige Aufsetzungszone für die jeweiligen Sägezähne aufweist.

Bei einer erfindungsgemäß ausgeführten Erwärmung mittels Laserbestrahlung kann über eine Regelung der Laserleistung eine Aufheizgeschwindigkeit erreicht werden, welche die erfindungsgemäß kurze Einwirkungszeit zum Erreichen der Schränktemperatur sicherstellt.

Die erfindungsgemäße Erwärmung kann unter Schutzgas erfolgen, um z. B. Verzunderungen zu vermeiden.

Durch die erfindungsgemäß kurzzeitige Erwärmung der Bandsägeblätter treten keine anlassbedingten Umwandlungs- und / oder Diffusionsvorgänge im erwärmten Sägeblattgefüge auf, wodurch die Härte der behandelten Sägezähne unverändert bleibt. Dennoch können die Sägezähne durch die Erwärmung unter einer verminderten Gefahr von Rissbildung z. B. auch dann geschränkt werden, wenn ihre vorliegende Härte bei ca. 40 - 69 HRC liegt, da die so erwärmten Sägezähne trotz derartiger Härten geschmeidiger verformt werden können.

Weiterhin sieht die Erfindung vor, dass die Sägezähne unmittelbar nach Ablauf der Einwirkungszeit, die zum Aufheizen benötigt wird, geschränkt und dann, insbesondere durch Luftbeströmung, abgekühlt werden. Unmittelbar bedeutet hierbei, dass die Sägezähne bereits nach wenigen Sekunden im erfindungsgemäß temperierten Zustand geschränkt und danach sofort wieder abgekühlt werden. So dass sichergestellt bleibt, dass die Sägezähne auch nach dem Schränken durch die erfindungsgemäße Behandlung in ihren Materialeigenschaften, insbesondere in ihrer Härte, unbeeinflusst bleiben. Durch die kurze Aufheizzeit ist sichergestellt, dass keine Material- bzw. Gefügeumwandlungen erfolgen können.

Vorzugsweise werden die Bandsägeblätter im Durchlaufprozess erfindungsgemäß behandelt. Der Durchlaufprozess beinhaltet die erfindungsgemäß kurz ausgeführte Erwärmung der Sägezähne, deren Schränkung und deren anschließende Abkühlung, insbesondere durch Luftbeströmung. Mittels des Durchlaufprozesses sind kurze Prozesszeiten von lediglich wenigen Sekunden möglich, in welchen die erfindungsgemäße Erwärmung der Sägezähne, ihre Schränkung und ihre Abkühlung auf eine vorzugsweise vorbestimmte Endtemperatur erfolgt.

Der besondere Wert der Erfindung liegt darin, dass zur Herstellung der Bandsägeblätter ein zum stählernen Grundmaterial härteres und mit den Sägezähnen versehenes Material zugekauft werden kann, welches ggf. vom Hersteller zertifizierte Härtewerte aufweist, welche durch das erfindungsgemäße Verfahren unverändert bleiben. Dieser Vorteil betrifft insbesondere Bandsägeblätter aus Bimetall. Insbesondere für das Grundmaterial kann Kohlenstoffstahl Verwendung finden.

Vorzugsweise ist die maximal mögliche Einwirkungszeit der Erwärmung kürzer als die materialspezifische Anlaufzeit für die Bildung von Ferrit, Perlit und Zwischengefüge. Mit dieser Maßnahme wird eine Einwirkungszeit sichergestellt, bei welcher keine anlassbedingten Umwandlungs- und / oder Diffusionsvorgänge im Sägeblattgefüge auftreten können.

Die Einwirkungszeit beträgt weniger als 2 Sekunden. Vorzugsweise liegt die Einwirkungszeit in einem Bereich von 0,2 Sekunden bis 1,2 Sekunden und besonders bevorzugt in einem Bereich von 0,8 Sekunden bis 1,2 Sekunden.

Die Erwärmung ist erfindungsgemäß prozessgesteuert, um die gewünschte Erwärmungstemperatur, bzw. Schränktemperatur, der Sägezähne in einer derartig kurzen Einwirkungszeit zu erzielen.

Mittels des Durchlaufverfahrens wird weiterhin sichergestellt, dass die erwärmten Sägezähne bereits nach wenigen Sekunden, vorzugsweise nach wenigen zehntel Sekunden nach ihrer Erwärmung geschränkt werden, so dass sie zum Zeitpunkt ihrer Schränkung eine Temperatur von 500 Grad Celsius bis 550 Grad Celsius aufweisen. Mit einer derart eingestellten Temperatur können die erwärmten Sägezähne trotz ihres gegenüber dem stählernen Grundmaterial härteren Materials ohne Gefahr von Rissbildungen geschränkt werden.

Vorzugsweise beinhaltet der Durchlaufprozess, dass taktweise jeweils ein Zahngruppenabschnitt erwärmt und ein diesem voreilender, bereits erwärmter Zahngruppenabschnitt zeitgleich geschränkt wird. Ergänzend hierzu wird vorgeschlagen, dass die Schränkung des jeweils voreilenden Zahngruppenabschnittes innerhalb der Erwärmungszeit vollzogen wird. Mit dieser Maßnahme wird ein zeitlich besonders effizienter Durchlaufprozess realisiert, in welchem die erfindungsgemäß kurzzeitige Erwärmung der Sägezähne, ihre Schränkung und ihre unmittelbar darauf folgende Abkühlung in wenigen Sekunden realisiert werden können.

Die Länge der Zahngruppenabschnitte kann beispielsweise von der Länge einer periodisch auftretenden Varioverzahnung der Bandsägeblätter gebildet werden.

Vorzugsweise wird das jeweilige Bandsägeblatt in seiner Längsrichtung schrittweise im Durchlaufverfahren über die Länge der Zahngruppenabschnitte fortbewegt. Hierdurch kann ein jeweiliger Zahngruppenabschnitt in einem ersten Schritt erfindungsgemäß kurzzeitig erwärmt werden, in einem zweiten Schritt geschränkt und in einem dritten, bzw. n-ten Schritt abgekühlt werden. Der n-te Schritt kann hierbei der letzte Schritt einer nach dem Schränken stattfindenden Kühlkette sein, die z. B. von aneinander gereihten Luftbeströmungsvorrichtungen gebildet sein kann, die vom Bandsägeblatt schrittweise durchlaufen werden.

Dabei kann vorgesehen sein, dass die Sägezähne mittels zumindest nahezu senkrecht zur Sägeblattebene beweglicher Horizontal-Stößel geschränkt werden.

Insbesondere mit einer induktiv oder mittels Laserbestrahlung ausgeführten Erwärmung können die Sägezähne berührungslos, also auch verschleißfrei erwärmt werden. Hierdurch kann das Durchlaufverfahren über die Zeit stets präzise durchgeführt werden. Weiterhin sind mit derartigen Erwärmungsmethoden kürzeste Aufheizphasen möglich, die allerhöchstens zu minimalen Umwandlungen im Gefüge führen, welche keine Änderungen von voreingestellten Materialeigenschaften zur Folge haben.

Es zeigen:
Fig. 1 ein nach dem erfindungsgemäßen Verfahren In einem schrittweisen Durchlaufprozess behandlungsfähiges Bandsägeblatt;
Fig. 2 ein weiteres Ausführungsbeispiel eines mit dem erfindungsgemäßen Verfahren behandlungsfähigen Bandsägeblatts;
Fig. 3 eine schematische Darstellung zur Realisierung eines mit dem erfindungsgemäßen Verfahren geschränkten Bandsägeblatts im Durchlaufverfahren;
Fig. 4 eine Vorrichtungslösung zur Durchführung des erfindungsgemäßen Verfahrens in Draufsicht;
Fig. 5 eine Detailansicht der Sägezähne des gem. Fig. 2 dargestellten Bandsägeblatts;
Fig. 6 eine schematische Darstellung einer Vorrichtung zu Durchführung des erfindungsgemäßen Verfahrens;
Fig.7 eine Vorrichtung zum Schränken eines Sägebandes unter gleichzeitiger Aufwickelung eines Trennbandes nach dem Schränken;
Fig. 8 einen Querschnitt durch zwei aufeinander folgende Wickelschichten bei einer Vorrichtung gemäß Fig. 7;
Fig. 9 eine Umwickelvorrichtung;
Fig. 10 eine Schränkvorrichtung.

Sofern im Folgenden nichts anderes gesagt ist, gilt die folgende Beschreibung stets für alle Figuren.

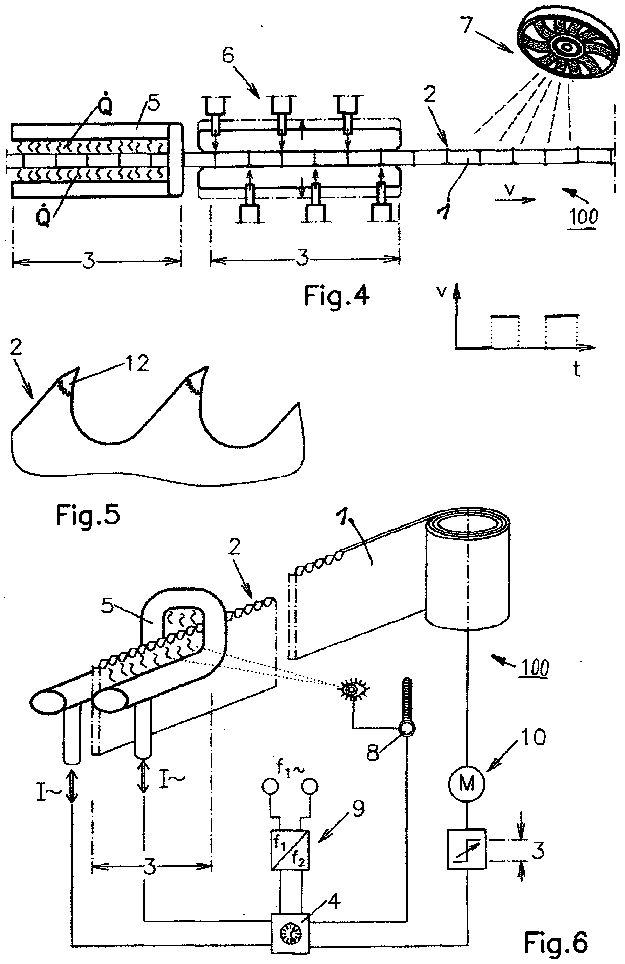

Insbesondere die Figuren 4 und 6 zeigen eine Vorrichtung 100 zum Schränken von Bandsägeblättern 1.

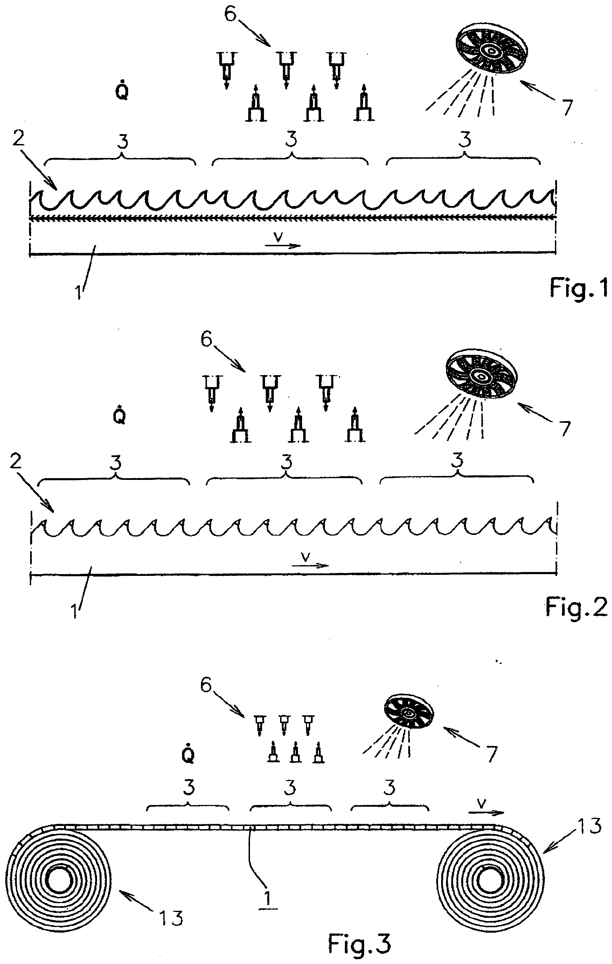

Insbesondere die Figuren 1 und 2 zeigen, dass die Bandsägeblätter 1 aus einem stählernen Grundmaterial und daran angebrachten Sägezähnen 2 bestehen, die ein gegenüber dem Grundmaterial härteres Material aufweisen. Insbesondere in Fig. 1 wird hierzu ein Bandsägeblatt aus Bimetall dargestellt. Das in Fig. 2 dargestellte Bandsägeblatt 1 weist Sägezähne auf, die mit separaten Schneiden 12 bestückt sind, siehe Fig. 5, welche aus Hartlegierungen auf Kobalt-Chrom-Basis bestehen. Derartige Hartlegierungen können auf das stählerne Grundmaterial aufgeschweißt werden, so dass ein Schränken der Sägezähne im Bereich unterhalb der Anlasstemperatur möglich ist, ohne dass die Schneiden 12 aus Hartlegierungen ihren Verbund mit dem stählernen Grundmaterial verlieren. Auch können die separaten Schneiden 12 aus Hartmetall bestehen, wobei in diesem Fall das Bandsägeblatt 1 mittels Hartlotverfahren mit den Schneiden 12 bestückt ist, wobei die Verarbeitungstemperatur des verwendeten Hartlotes für die Schneiden 12 über 600° Celsius beträgt, damit ein Nichtablösen der Schneiden 12 beim Schränken sichergestellt ist. Die Sägezähne 2 bzw. die Schneiden 12 können gefräst oder geschliffen sein. Zum Beispiel an der Zahnbrust und / oder an den Zahnseiten.

Insbesondere Fig. 5 zeigt die Schneiden 12 für die Sägezähne 2, welche auf die Sägezähne 2 aufgeschweißt sind.

Insbesondere Fig. 6 zeigt, dass die Vorrichtung 100 zur Durchführung des erfindungsgemäßen Verfahrens ein zeitprogrammierbares Steuergerät 4 aufweist. Im Steuergerät 4 ist die jeweilige Einwirkungszeit der Erwärmung einspeicherbar. Weiterhin ist über das Steuergerät 4 ein Erwärmungsgerät 5 ansteuerungsfähig, mit welchem die Sägezähne 2 zwischen ihrem Zahnfuß und ihrer Zahnspitze in Längsrichtung des Bandsägeblattes 1 schmalstreifenförmig erwärmungsfähig sind.

Das Erwärmungsgerät 5 kann beispielsweise von Elektroden gebildet werden, die an beiden Längsseiten, zwischen dem Zahnfuß und der Zahnspitze der jeweiligen Sägezähne 2, ansetzbar sind, so dass ein geschlossener Stromkreis für eine konduktiv und erfindungsgemäß ausgeführte Erwärmung gebildet wird. Alternativ hierzu kann das Erwärmungsgerät 5 au von einem Laser gebildet werden, wobei die Leistung des Lasers über das Steuergerät 4 regelbar ist.

In dem gezeigten Fall wird das Erwärmungsgerät 5 von einem Induktor 5 gebildet, der zur Erwärmung der Sägezähne 2 des Bandsägeblattes 1 an diesem berührungslos ansetzbar ist. Hierzu ist der Induktor 5 U-förmig ausgeführt und kann entlang der Längsrichtung des Bandsägeblattes 1 geführt werden, so dass an beiden Längsseiten des Bandssägeblattes 1 eine schmalstreifenförmige lokale Erwärmungszone vom Induktor 5 beaufschlagt wird, wenn dieser entlang des Bandsägeblattes bewegt wird.

Mit dieser Maßnahme ist die Vorrichtung geeignet, die Sägezähne 2 unmittelbar vor dem Schränken einer induktiven Erwärmung bis kurz unterhalb der Anlasstemperatur zu unterziehen. Erfindungsgemäß ist die Einwirkungszeit der Erwärmung derart kurz gewählt, dass im Sägeblattgefüge keine anlassbedingten Umwandlungs - und / oder Diffusionsvorgänge auftreten können. Hierdurch wird sichergestellt, dass die Härtewerte der Sägezähne 2 durch die erfindungsgemäße Erwärmung unverändert bleiben. Dennoch weisen die Sägezähne 2 für die Schränkung eine Temperatur auf, mit welcher die gegenüber dem stählernen Grundmaterial gehärteten Sägezähne 2 ohne eine Gefahr von Rissbildung geschränkt werden können. Dabei wird erfindungsgemäß eine schmalstreifige, erwärmte Biegelinie geschaffen, um welche die Sägezähne mit besagtem Vorteil geschränkt werden.

Insbesondere die Fig. 4 und 6 stellen dar, dass über das Steuergerät 4 eine dem Induktor 5 nachgeordnete Schränkvorrichtung 6 ansteuerbar ist. Das Bandsägeblatt 1 ist durch die Schränkvorrichtung 6 in seiner Längsrichtung schrittweise hindurchführbar. Hierdurch wird ein Durchlaufverfahren für das Bandsägeblatt sichergestellt, bei welchem die erwärmten Sägezähne 2 schrittweise zur insbesondere in Fig. 4 dargestellten Schränkvorrichtung 6 geführt und bereits wenige Sekunden nach ihrer Erwärmung geschränkt werden können. Im Bereich der Schränkvorrichtung 6, in diesen Beispielen unmittelbar der jeweiligen Schränkvorrichtung 6 nachgeordnet, ist als Kühlvorrichtung eine Luftbeströmungsvorrichtung 7 vorgesehen. Die Luftbeströmungsvorrichtung 7 ist hier als Ventilator ausgeführt, der in den Figuren lediglich schematisch dargestellt ist. Es können auch ohne weiteres mehrere Ventilatoren, zum Beispiel in Längsrichtung des Bandsägeblattes 1 verteilt der Schränkvorrichtung 6 nachgeordnet sein, so dass eine Kühlstrecke, bzw. Kühlkette, gebildet wird, nach deren Durchlauf das Bandsägeblatt 1 z. B. wieder auf Raumtemperatur abgekühlt sein kann.

Weiterhin zeigt insbesondere Fig. 6, dass am Steuergerät 4 ein Temperaturmessgerät 8 zur Erfassung der Sägeblatttemperatur angeschlossen sein kann. Hierdurch kann die jeweils induktiv, konduktiv oder mittels Laserbestrahlung erfolgte Erwärmung kontrolliert werden und gegebenenfalls bereits vor Ablauf der Einwirkungszeit beendet werden, wenn das Temperaturmessgerät 8 eine gewünschte Schränktemperatur der Sägezähne feststellt. Das Temperaturmessgerät 8 ist in diesem Beispiel ein Gerät, mit welchem die Wärmestrahlung der Sägezähne erfassungsfähig ist.

Der Induktor 5 wird über einen Niederfrequenzgenerator 9 betrieben. Dies wird insbesondere in Fig. 6 dargestellt. Hierdurch wird sichergestellt, dass die Sägezähne 2 vollständig durchwärmt werden können. Vorzugsweise reicht die vom Niederfrequenzgenerator 9 einstellbare Frequenz von 0,05 bis 0,5 kHz. Die jeweils einzustellende Frequenz ist eine Funktion der jeweiligen Bandsägeblatt-Dicke.

Weiterhin zeigt insbesondere Fig. 6, dass über das Steuergerät 4 ein Schritt- oder Servomotor 10 ansteuerbar ist, welcher zur taktweisen Bewegung des Bandsägeblattes 1 vorgesehen ist.

Hierdurch ist das jeweilige Bandsägeblatt 1 in seiner Längsrichtung schrittweise über die Länge von vorgesehenen Zahngruppenabschnitten 3 fortbewegbar. Die Zahngruppen werden Insbesondere in den Fig. 1, 2, 3 und 4 dargestellt. Insbesondere die Fig. 1 und 2 zeigen die Zahngruppen 3 als Varioverzahnungen. Weiterhin stellen die Fig. 1 bis 4 dar, dass die Zahngruppenabschnitte 3 taktweise erwärmt, mittels der Schränkvorrichtung 6 geschränkt und anschließend mittels der Luftbeströmungsvorrichtung 7 abgekühlt werden.

In einem ersten Schritt wird ein jeweiliger Zahngruppenabschnitt 3 durch den Induktor 5 erwärmt. Die Einwirkungszeit der Erwärmung liegt vorzugsweise in einem Bereich von 0,2 Sekunden bis 1,2 Sekunden und besonders bevorzugt in einem Bereich von 0,8 Sekunden bis 1,2 Sekunden.

Durch den in den Figuren dargestellten Durchlaufprozess für das Bandsägeblatt 1 wird der besagte Zahngruppenabschnitt 3 nach seiner Erwärmung in einem zweiten Schritt der Schränkvorrichtung 6 zugeführt. Dies geschieht unmittelbar nach der Erwärmung, d. h. nach wenigen Sekunden bis wenigen Zehntel Sekunden. Die erwärmten Sägezähne 3 weisen zum Zeitpunkt ihrer Schränkung eine Temperatur von 500 Grad Celsius bis 550 Grad Celsius auf. Der sich im zweiten Schritt befindliche Zahngruppenabschnitt 3 wird geschränkt, während ein diesem nacheilender Zahngruppenabschnitt 3 erwärmt wird. Die Schränkung des jeweils voreilenden Zahngruppenabschnittes 3 wird innerhalb der Erwärmungszeit des jeweils nacheilenden Zahngruppenabschnittes 3 vollzogen.

Insbesondere Fig. 3 zeigt, dass das im Durchlaufprozess befindliche Bandsägeblatt 1 von einer ersten Rolle 13 kommend schrittweise vom Induktor 5 erwärmt wird, von der Schränkvorrichtung 6 geschränkt wird und von der Luftbeströmungsvorrichtung 7 wieder abgekühlt wird und danach auf einer zweiten Rolle 13 wieder aufgewickelt wird.

Insbesondere die Fig. 4 zeigt, fass als Schränkvorrichtung 6 eine Stößelschränkvorrichtung vorgesehen ist. Die jeweilige Bewegungsbahn der einzelnen Stößel 11 liegt vorzugsweise senkrecht zur mittleren Ebene des Bandsägeblattes 1. Eine derartig ausgeführte Schränkvorrichtung 6 ist besonders aufwandsarm in ihrer Herstellung und in ihrem Betrieb. Die Schränkvorrichtung 6 ist derart ausgelegt, dass die Varioverzahnung des jeweiligen Zahngruppenabschnittes 3 in einem einzigen Arbeitsgang durch die Schränkvorrichtung 6 geschränkt wird.

Vorzugsweise ist der lokale Bereich, in welchem die Erwärmung der Sägezähne stattfindet, einer Schutzgasatmosphäre aussetzbar, um z. B. die Bildung von Anlassmarkierungen zu vermeiden.

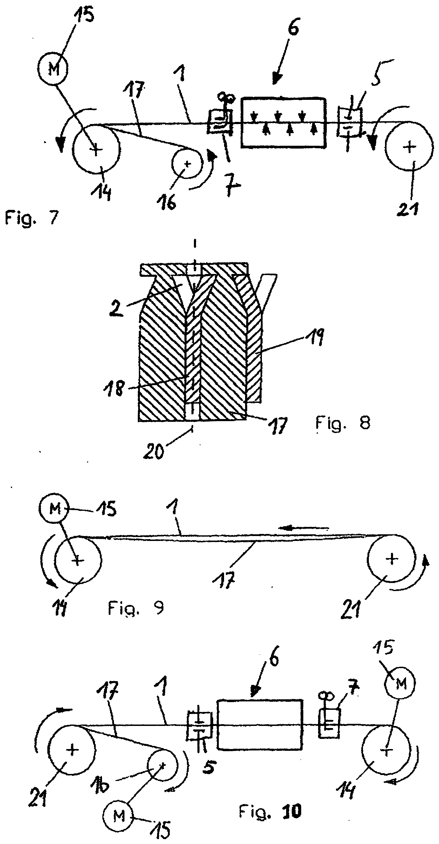

Ergänzend zum bisher Gesagten zeigen die Fig. 7 und 8 die Erfindung im Zusammenwirken mit einer Vorrichtung zum Abwickeln des ungeschränkten und Aufwickeln des geschränkten Sägebandes 1 unter gleichzeitiger Mitaufwicklung eines Trennbandes 17. Das Erwärmungsgerät 5 und die Luftbeströmungsvorrichtung 7 sind für eine vereinfachte Darstellung des Ab- und Aufwickelmechanismus in den Fig. 8 und 9 dargestellt.

Hierzu wird von einer Abwickelspule 21 das aufgespulte Sägeband 1 von rechts nach links abgezogen und der Schränkvorrichtung 6 im schrittweisen Durchlauf zugeführt. Nachdem die Zähne 2 geschränkt worden sind, wird das Sägeband 1 der Aufwickelhaspel 14 zugeführt. Die Aufwickelhaspel 14 wird motorisch angetrieben. Hierzu dient der Antriebsmotor 15, der mit der Drehachse der Aufwickelhaspel 14 gekoppelt ist.

Wesentlich ist nun, dass eine Trennbandspule 16 vorgesehen ist. Die Trennbandspule 16 weist ein bandförmig aufgewickeltes Trennmaterial 17 auf. Die Breite des Trennmaterials 17 ist mindestens so groß wie der Bereich der Sägezähne 2, vorzugsweise etwa gleich der Breite des Sägebandes 1. Die Trennbandspule 16 ist frei drehend gelagert. Gegebenenfalls. Kann die Trennbandspule 16 auch gebremst sein. Das Trennband wird in den Zwickel zwischen dem zugeführten Sägeband 1 und dem bereits vorhandenen Wickel auf der Aufwickelspule 14 eingeführt. Dabei wird das Trennband 17 mit derselben Geschwindigkeit zugeführt wie das aufzuwickelnde Sägeband 1. Gegebenenfalls läßt sich die Trennbandspule 16 geringfügig bremsen, um auch bei geringen Schwankungen der Aufwickelgeschwindigkeit unerwünschte Schleifenbildung zu verhindern. Damit wird zwar dem freien Abzug des Trennbandes 17 ein gewisser Widerstand entgegengesetzt, andererseits jedoch ein ungehindertes Ablaufen des Trennbandes 17 vermieden.

Hiervon unterscheidet sich die Ausführung nach Fig. 9 darin, dass dort bereits unter Verwendung einer Zwischenlage 17 auf der Abwickelspule 21 aufgewickeltes Sägeband 1 lediglich zusammen mit der Zwischenlage 17 abgewickelt und unmittelbar danach auf eine neue Aufwickelhaspel 14 aufgewickelt wird.

Fig. 10 zeigt darüber hinaus, dass ein ebenfalls unter Verwendung eines Trennmaterials 17 aufgewickeltes Sägeband 1 abgezogen und der Schränkvorrichtung 6 zugeführt wird, allerdings hier von links nach rechts. Der Abzug des Trennmaterials 17 erfolgt synchron mit dem Abzug des Sägebandes 1 von der Abwickelspule 21. Das Trennmaterial 17 wird dabei auf eine Aufwickelspule 16 geführt und dort als Wickel abgelegt, um für einen weiteren Verarbeitungsvorgang zur Verfügung zu stehen, während das bearbeitete Sägeband 1 der Aufwickelspule 14 zugeführt wird.

Bei dem Material des Trennbandes 17 kann es sich bevorzugt um ein relativ dickes Papiermaterial handeln, wobei der innere Zusammenhalt und die Dicke des Trennmaterials 17 so ausgewählt sind, dass eine gegenseitige Berührung der Zahnflanken auch bei Aufwickeln unter hoher Vorspannung zuverlässig vermieden ist.

Ergänzend hierzu zeigt Fig. 8 einen Querschnitt aus zwei benachbarten Wickelschichten 18, 19 mit einer dazwischen angeordneten Lage eines Trennbandes 17. Ausgehend von der jeweils mittleren Sägeblattebene 20 sind die Zähne 2 abwechselnd zu beiden Seiten aus der mittleren Sägeblattebene 20 herausgebogen.

Hierdurch entstehen zwischen zwei benachbarten Wickelschichten Bereiche, in denen sich die aufeinander zu gebogenen Zähne berühren können. Um dies zu vermeiden, ist ein bandförmiges Trennmaterial 17 zwischen die benachbarten Wickelschichten 18 und 19 gelegt. Die Breite des Trennbandes 17 überragt dabei die Breite des Sägebandes 1. In jedem Falle jedoch soll das Trennband 17 im Bereich der Sägezähne 1 abgelegt sein. Dabei sind die Materialdicke des Trennbandes 17 und der innere Zusammenhalt so ausgewählt, dass die aus der mittleren Sägeblattebene 20 hinausragenden Zähne 2 in das Material des Trennbandes 17 eindringen können, und zwar ohne sich gegenseitig zu berühren. Hierdurch wird nicht nur ein Kontakt der scharfen Sägezahnflanken verhindert, sondern durch das Eindringen der Sägezahnspitzen in das Material des Trennbandes 17 wird dieses auch in seitlicher Richtung festgehalten. Dies ist vorteilhaft bei geringer Aufwickelspannung des Sägebandes 1, da auf diese Weise unerwünschtes Verrutschen des Trennbandes 17 unterbleibt.

### Bezugszeichenliste

- 1: Bandsägeblatt, Sägeband
- 2: Sägezahn, Zahn
- 3: Zahngruppenabschnitt
- 4: Steuergerät
- 5: Erwärmungsgerät, Induktor
- 6: Schränkvorrichtung
- 7: Abkühlvorrichtung, Luftbeströmungsvorrichtung
- 8: Temperaturmessgerät
- 9: Niederfrequenzgenerator
- 10: Schrittmotor
- 11: Stößel
- 12: Schneide
- 13: Rolle
- 14: Aufwickelspule, Aufwickelhaspel
- 15: Antriebsmotor
- 16: Trennbandspule
- 17: Zwischenlage, Trennband, Trennmaterial
- 18: Wickelschicht
- 19: Wickelschicht
- 20: mittlere Sägeblattebene
- 21: Abwickelspule
- 100: Vorrichtung

## Patentansprüche

1. Verfahren zum Schränken von Bandsägeblättern (1), bestehend aus einem stählernen Grundmaterial und daran angebrachten Sägezähnen (2), die ein gegenüber dem Grundmaterial härteres Material aufweisen, **dadurch gekennzeichnet, dass** die Sägezähne (2) unmittelbar vor dem Schränken zwischen ihrem Zahnfuß und ihrer Zahnspitze lediglich einer lokalen, in Längsrichtung des Bandsägeblattes (1) schmalstreifenförmig verlaufenden Erwärmung bis kurz unterhalb der Anlasstemperatur von 600 °C unterzogen werden, wobei die Einwirkungszeit der Erwärmung weniger als 2 Sekunden beträgt und derart kurz gewählt ist, dass im Sägeblattgefüge keine anlassbedingten Umwandlungs- und / oder Diffusionsvorgänge auftreten und wobei die Sägezähne (2) unmittelbar nach Ablauf der Einwirkungszeit geschränkt und dann abgekühlt werden.

2. Verfahren nach Anspruch 1, **dadurch gekennzeichnet, dass** die Sägezähne (2) durch Luftbeströmung abgekühlt werden.

3. Verfahren nach Anspruch 1 oder 2, **dadurch gekennzeichnet, dass** die Einwirkungszeit in einem Bereich von 0,2 Sekunden bis 1,2 Sekunden liegt.

4. Verfahren nach Anspruch 3, **dadurch gekennzeichnet, dass** die Einwirkungszeit in einem Bereich von 0,8 Sekunden bis 1,2 Sekunden liegt.

5. Verfahren nach einem der Ansprüche 1 bis 4, **dadurch gekennzeichnet, dass** die erwärmten Sägezähne (2) zum Zeitpunkt ihrer Schränkung eine Temperatur von 500 °C bis 550 °C aufweisen.

6. Verfahren nach einem der Ansprüche 1 bis 5, **dadurch gekennzeichnet, dass** taktweise jeweils ein Zahngruppenabschnitt (3) erwärmt und ein diesem voreilender, bereits erwärmter Zahngruppenabschnitt (3) zeitgleich geschränkt wird.

7. Verfahren nach Anspruch 6, **dadurch gekennzeichnet, dass** die Schränkung des jeweils voreilenden Zahngruppenabschnitts (3) innerhalb der Erwärmungszeit vollzogen wird.

8. Verfahren nach einem der Ansprüche 6 oder 7, **dadurch gekennzeichnet, dass** das Bandsägeblatt (1) in seiner Längsrichtung schrittweise über die Länge der Zahngruppenabschnitte (3) fortbewegt wird.

9. Verfahren nach einem der Ansprüche 1 bis 8, **dadurch gekennzeichnet, dass** die Sägezähne (2) mittels zumindest nahezu senkrecht zur Sägeblattebene beweglicher Horizontal-Stößel geschränkt werden.

10. Verfahren nach einem der Ansprüche 1 bis 9, **dadurch gekennzeichnet, dass** die Erwärmung induktiv, konduktiv oder mittels Laserbestrahlung erfolgt.

11. Verfahren nach einem der Ansprüche 1 bis 10, **dadurch gekennzeichnet, dass** bei einer induktiv ausgeführten Erwärmung diese im Niederfrequenzbereich erfolgt.

12. Verfahren nach einem der Ansprüche 1 bis 11, **dadurch gekennzeichnet, dass** die Erwärmung unter Schutzgas erfolgt.

13. Vorrichtung zur Durchführung des Verfahrens nach einem der Ansprüche 1 bis 12, **dadurch gekennzeichnet, dass** die Vorrichtung ein zeitprogrammierbares Steuergerät (4) aufweist, in welchem die jeweilige Einwirkungszeit der Erwärmung einspeicherbar ist, wobei über das Steuergerät (4) ein Erwärmungsgerät (5) ansteuerungsfähig ist, mit welchem die Sägezähne (2) zwischen ihrem Zahnfuß und ihrer Zahnspitze in Längsrichtung des Bandsägeblattes (1) schmalstreifenförmig erwärmungsfähig sind und wobei über das Steuergerät (4) eine dem Erwärmungsgerät (5) nachgeordnete Schränkvorrichtung (6) ansteuerbar ist, durch welche das Bandsägeblatt (1) in seiner Längsrichtung schrittweise hindurchführbar ist.

14. Vorrichtung nach Anspruch 13, **dadurch gekennzeichnet, dass** im Bereich der Schränkvorrichtung (6) und / oder unmittelbar dieser nacheilend eine oder mehrere Abkühlvorrichtungen (Luftbeströmungsvorrichtungen 7) vorgesehen ist / sind.

15. Vorrichtung nach Anspruch 13 oder 14, **dadurch gekennzeichnet, dass** am Steuergerät (4) ein Temperaturmessgerät (8) zur Erfassung der Bandsägeblatttemperatur angeschlossen ist.

16. Vorrichtung nach einem der Ansprüche 13 bis 15, **dadurch gekennzeichnet, dass** das Erwärmungsgerät (5) von einem am Bandsägeblatt (1) berührungslos ansetzbaren Induktor gebildet wird, der über einen Niederfrequenz-Generator (9) betrieben wird.

17. Vorrichtung nach einem der Ansprüche 13 bis 15, **dadurch gekennzeichnet, dass** das Erwärmungsgerät (5) von einem Laser gebildet wird, wobei die Leistung des Lasers über das Steuergerät (4) regelbar ist.

18. Vorrichtung nach einem der Ansprüche 13 bis 17, **dadurch gekennzeichnet, dass** über das Steuergerät (4) ein Schritt- oder Servomotor (10) ansteuerbar ist, welcher zur taktweisen Bewegung des Bandsägeblattes (1) vorgesehen ist.

19. Vorrichtung nach einem der Ansprüche 14 bis 18, **dadurch gekennzeichnet, dass** die jeweilige Abkühlvorrichtung (7) von einem Ventilator gebildet wird.

20. Vorrichtung nach einem der Ansprüche 13 bis 19, **dadurch gekennzeichnet, dass** als Schränkvorrichtung (6) eine Stößelschränkvorrichtung vorgesehen ist.

21. Vorrichtung nach Anspruch 20, **dadurch gekennzeichnet, dass** die jeweilige Bewegungsbahn der einzelnen Stößel (11) zumindest nahezu senkrecht zur mittleren Ebene des Bandsägeblatts (1) liegt.

22. Vorrichtung nach einem der Ansprüche 13 bis 21, **dadurch gekennzeichnet, dass** der lokale Bereich, in welchem die Erwärmung der Sägezähne (2) stattfindet, einer Schutzgasatmosphäre aussetzbar ist.

23. Vorrichtung nach einem der Ansprüche 13 bis 22, **dadurch gekennzeichnet, dass** zum Schränken eines Bandsägeblatts (1) eine Abwickelspule (21) vor- , sowie eine Aufwickelspule (14) nachgeordnet sind, vorzugsweise wobei das Bandsägeblatt (1) hinter der Schränkvorrichtung (6) durch eine Fördereinrichtung gezogen wird.

24. Vorrichtung nach Anspruch 23, **dadurch gekennzeichnet, dass** eine abwickelbare Trennbandspule (16) vorgesehen ist, von welcher das Trennmaterial (17) abgezogen und im wesentlichen zugleich mit dem Sägeband (1) aufgewickelt wird.

25. Vorrichtung nach Anspruch 24, **dadurch gekennzeichnet, dass** die Achse der Trennbandspule (16) parallel zur Achse der Aufwickelspule (14) liegt.

26. Vorrichtung nach Anspruch 24 oder 25, **dadurch gekennzeichnet, dass** die Trennbandspule (16) frei drehend gelagert ist.

27. Vorrichtung nach Anspruch 26, **dadurch gekennzeichnet, dass** Ablaufbremsen vorgesehen sind, welche eine derart entgegen der Ablaufrichtung wirkende Bremskraft aufbringen, dass auch bei unregelmäßiger Aufwickelgeschwindigkeit ein Überschießen des Trennmaterials (17) unterbleibt.

## Claims

1. Method for setting band saw blades (1), consisting of a steel base material and saw teeth (2) attached thereto, which comprise a material that is harder than the base material, **characterized in that**, directly before the setting, the saw teeth (2) are subjected to only local heating, to just below the annealing temperature of 600°C, between their tooth root and their tooth tip in the form of a narrow strip running in the longitudinal direction of the band saw blade (1), the time of exposure to the heating being less than 2 seconds and being chosen to be so short that no annealing-induced transformation and/or diffusion processes occur in the structure of the saw blade, and the saw teeth (2) being set directly after the exposure time has elapsed and then cooled down.

2. Method according to Claim 1, **characterized in that** the saw teeth (2) are cooled down by being exposed to a stream of air.

3. Method according to Claim 1 or 2, **characterized in that** the time of exposure lies in a range from 0.2 seconds to 1.2 seconds.

4. Method according to Claim 3, **characterized in that** the time of exposure lies in a range from 0.8 seconds to 1.2 seconds.

5. Method according to one of Claims 1 to 4, **characterized in that**, at the time they are set, the heated saw teeth (2) are at a temperature of 500°C to 550°C.

6. Method according to one of Claims 1 to 5, **characterized in that**, in a cyclic manner, a group-of-teeth segment (3) is in each case heated and an already heated group-of-teeth segment (3) ahead thereof is simultaneously set.

7. Method according to Claim 6, **characterized in that** the setting of the group-of-teeth segment (3) that is respectively ahead is completed within the heating time.

8. Method according to either of Claims 6 and 7, **characterized in that** the band saw blade (1) is advanced incrementally in its longitudinal direction over the length of the group-of-teeth segments (3).

9. Method according to one of Claims 1 to 8, **characterized in that** the saw teeth (2) are set by means of horizontal pushrods that are movable at least almost perpendicularly to the plane of the saw blade.

10. Method according to one of Claims 1 to 9, **characterized in that** the heating is performed inductively, conductively or by means of laser irradiation.

11. Method according to one of Claims 1 to 10, **characterized in that**, in the case of heating that is carried out inductively, this is performed in the low-frequency range.

12. Method according to one of Claims 1 to 11, **characterized in that** the heating is performed under shielding gas.

13. Device for carrying out the method according to one of Claims 1 to 12, **characterized in that** the device has a time-programmable control unit (4), in which the respective exposure time of the heating can be stored, a heating unit (5) with which the saw teeth (2) can be heated between their tooth root and their tooth tip in the form of a narrow strip in the longitudinal direction of the band saw blade (1) being activatable by means of the control unit (4), and a setting device (6), which is arranged downstream of the heating unit (5) and through which the band saw blade (1) can be incrementally passed in its longitudinal direction, being activatable by means of the control unit (4).

14. Device according to Claim 13, **characterized in that** one or more cooling devices (air streaming devices 7) is/are provided in the region of the setting device (6) and/or directly thereafter.

15. Device according to Claim 13 or 14, **characterized in that** a temperature-measuring unit (8) for detecting the band saw blade temperature is connected to the control unit (4).

16. Device according to one of Claims 13 to 15, **characterized in that** the heating unit (5) is formed by an inductor, which can be placed at the band saw blade (1), without being in contact, and is operated by means of a low-frequency generator (9) .

17. Device according to one of Claims 13 to 15, **characterized in that** the heating unit (5) is formed by a laser, the power of the laser being controllable by means of the control unit (4).

18. Device according to one of Claims 13 to 17, **characterized in that** a stepping motor or servo motor (10), which is provided for the cyclic movement of the band saw blade (1), is activatable by means of the control unit (4).

19. Device according to one of Claims 14 to 18, **characterized in that** the respective cooling device (7) is formed by a fan.

20. Device according to one of Claims 13 to 19, **characterized in that** a pushrod setting device is provided as the setting device (6).

21. Device according to Claim 20, **characterized in that** the respective path of movement of the individual pushrods (11) lies at least virtually perpendicular to the central plane of the band saw blade (1).

22. Device according to one of Claims 13 to 21, **characterized in that** the local region in which the heating of the saw teeth (2) takes place can be exposed to a shielding gas atmosphere.

23. Device according to one of Claims 13 to 22, **characterized in that**, for setting a band saw blade (1), an unwinding reel (21) is arranged upstream and a winding-up reel (14) is arranged downstream, the band saw blade (1) preferably being pulled behind the setting device (6) by a conveying mechanism.

24. Device according to Claim 23, **characterized in that** an unwindable separating band reel (16) is provided, from which the separating material (17) is drawn off and is wound up substantially at the same time as the saw band (1).

25. Device according to Claim 24, **characterized in that** the axis of the separating band reel (16) lies parallel to the axis of the winding-up reel (14).

26. Device according to Claim 24 or 25, **characterized in that** the separating band reel (16) is mounted in a freely rotating manner.

27. Device according to Claim 26, **characterized in that** run-off brakes are provided, which apply a braking force acting counter to the running-off direction in such a way that overshooting of the separating material (17) is prevented even when there is an irregular winding-up speed.

## Revendications

1. Procédé d'avoyage de lames de scie à ruban (1), composées d'un matériau de base en acier et de dents de scie (2) montées sur celui-ci, qui présentent un matériau plus dur par comparaison avec le matériau de base, **caractérisé en ce que** l'on soumet les dents de scie (2) avant l'avoyage entre leur pied de dent et leur tête de dent uniquement à un chauffage local, s'étendant en forme de bande étroite dans la direction longitudinale de la lame de scie à ruban (1), jusque légèrement en dessous de la température de revenu de 600°C, dans lequel la durée d'action du chauffage est inférieure à 2 secondes et est choisie tellement courte qu'il ne puisse pas se produire dans la structure de la lame de scie des phénomènes de transformation et/ou de diffusion dus au revenu et dans lequel on avoie les dents de scie (2) immédiatement après l'expiration de la durée d'action et on les refroidit ensuite.

2. Procédé selon la revendication 1, **caractérisé en ce que** l'on refroidit les dents de scie (2) au moyen d'un courant d'air.

3. Procédé selon la revendication 1 ou 2, **caractérisé en ce que** la durée d'action se situe dans une plage de 0,2 secondes à 1,2 secondes.

4. Procédé selon la revendication 3, **caractérisé en ce que** la durée d'action se situe dans une plage de 0,8 secondes à 1,2 secondes.

5. Procédé selon l'une quelconque des revendications 1 à 4, **caractérisé en ce que** les dents de scie chauffées (2) présentent à l'instant de leur avoyage une température de 500°C à 550°C.

6. Procédé selon l'une quelconque des revendications 1 à 5, **caractérisé en ce que** l'on chauffe de façon cyclique chaque fois une partie de groupe de dents (3) et on avoie simultanément une partie de groupe de dents (3) déjà chauffée précédant celle-ci.

7. Procédé selon la revendication 6, **caractérisé en ce que** l'on accomplit l'avoyage de la partie de groupe de dents (3) respectivement précédente à l'intérieur de la durée de chauffage.

8. Procédé selon une des revendications 6 ou 7, **caractérisé en ce que** l'on fait avancer la lame de scie à ruban (1) dans sa direction longitudinale pas à pas sur la longueur des parties de groupe de dents (3).

9. Procédé selon l'une quelconque des revendications 1 à 8, **caractérisé en ce que** l'on avoie les dents de scie (2) au moyen de poussoirs horizontaux mobiles au moins approximativement perpendiculairement au plan de la lame de scie.

10. Procédé selon l'une quelconque des revendications 1 à 9, **caractérisé en ce que** l'on effectue le chauffage par induction, par conduction ou au moyen d'un rayonnement laser.

11. Procédé selon l'une quelconque des revendications 1 à 10, **caractérisé en ce que**, en cas de chauffage par induction, on l'effectue dans le domaine des basses fréquences.

12. Procédé selon l'une quelconque des revendications 1 à 11, **caractérisé en ce que** l'on effectue le chauffage sous un gaz de protection.

13. Dispositif pour la mise en oeuvre du procédé selon l'une quelconque des revendications 1 à 12, **caractérisé en ce que** le dispositif présente un appareil de commande (4) à horloge programmable, dans lequel le temps d'action respectif du chauffage peut être mémorisé, dans lequel un appareil de chauffage (5), avec lequel les dents de scie (2) peuvent être chauffées en forme de bande étroite dans la direction longitudinale de la lame de scie à ruban (1) entre leur pied de dent et leur tête de dent, peut être commandé par l'appareil de chauffage (4) et dans lequel un dispositif d'avoyage (6) disposé en aval de l'appareil de chauffage (5), à travers lequel la lame de scie à ruban (1) peut être conduite pas à pas dans sa direction longitudinale, peut être commandé par l'appareil de commande (4).

14. Dispositif selon la revendication 13, **caractérisé en ce qu'**il est prévu dans la région du dispositif d'avoyage (6) et/ou immédiatement à la suite de celui-ci un ou plusieurs dispositif(s) de refroidissement (dispositifs à courant d'air 7).

15. Dispositif selon la revendication 13 ou 14, **caractérisé en ce qu'**un appareil de mesure de la température (8) pour déterminer la température de la lame de scie à ruban est relié à l'appareil de commande (4) .

16. Dispositif selon l'une quelconque des revendications 13 à 15, **caractérisé en ce que** l'appareil de chauffage (5) est formé par un inducteur applicable sans contact à la lame de scie à ruban (1), que l'on fait fonctionner au moyen d'un générateur à basse fréquence (9).

17. Dispositif selon l'une quelconque des revendications 13 à 15, **caractérisé en ce que** l'appareil de chauffage (5) est formé par un laser, dans lequel la puissance du laser est réglable au moyen de l'appareil de commande (4).

18. Dispositif selon l'une quelconque des revendications 13 à 17, **caractérisé en ce qu'**un moteur pas à pas ou un servomoteur (10), qui est prévu pour le mouvement cyclique de la lame de scie à ruban (1), peut être commandé au moyen de l'appareil de commande (4).

19. Dispositif selon l'une quelconque des revendications 14 à 18, **caractérisé en ce que** le dispositif de refroidissement respectif (7) est formé par un ventilateur.

20. Dispositif selon l'une quelconque des revendications 13 à 19, **caractérisé en ce qu'**il est prévu comme dispositif d'avoyage (6) un dispositif d'avoyage à marteaux.

21. Dispositif selon la revendication 20, **caractérisé en ce que** le chemin de déplacement respectif des marteaux individuels (11) est au moins approximativement perpendiculaire au plan médian de la lame de scie à ruban (1).

22. Dispositif selon l'une quelconque des revendications 13 à 21, **caractérisé en ce que** la région locale, dans laquelle le chauffage des dents de scie (2) est effectué, peut être exposée à une atmosphère de gaz protecteur.

23. Dispositif selon l'une quelconque des revendications 13 à 22, **caractérisé en ce que** pour l'avoyage d'une lame de scie à ruban (1), une bobine de déroulement (21) est disposée avant et une bobine d'enroulement (14) est disposée après, de préférence dans lequel la lame de scie à ruban (1) est tirée après le dispositif d'avoyage (6) par un dispositif de transport.

24. Dispositif selon la revendication 23, **caractérisé en ce qu'**il est prévu une bobine de bande de séparation déroulable (16), de laquelle le matériau de séparation (17) est prélevé et enroulé essentiellement en même temps que la lame de scie (1).

25. Dispositif selon la revendication 24, **caractérisé en ce que** l'axe de la bobine de bande de séparation (16) est parallèle à l'axe de la bobine d'enroulement (14) .

26. Dispositif selon la revendication 24 ou 25, **caractérisé en ce que** la bobine de bande de séparation (16) est montée à rotation libre.

27. Dispositif selon la revendication 26, **caractérisé en ce qu'**il est prévu des freins de déroulement, qui appliquent une force de freinage agissant à l'inverse de la direction de déroulement, de telle manière qu'un prélèvement excessif du matériau de séparation (17) cesse, même en cas de vitesse d'enroulement irrégulière.
